# EUROPÄISCHE PATENTSCHRIFT

(11) **EP 3 900 169 B1**
(45) Veröffentlichungstag und Bekanntmachung des Hinweises auf die Patenterteilung: **26.08.2026**
(21) Anmeldenummer: 19816692.8
(22) Anmeldetag: 06.12.2019
(51) Int. Cl.: H02K 15/14, H02K 5/10, H02K 15/12, G01B 11/22

(54) **VERFAHREN UND VORRICHTUNG ZUM DISPENSEN VON DICHTMASSE UND GEHÄUSE FÜR EINE ELEKTRISCHE MASCHINE**
METHOD AND DEVICE FOR DISPENSING SEALING COMPOUND, AND HOUSING FOR AN ELECTRIC MACHINE
PROCÉDÉ ET DISPOSITIF POUR DISTRIBUER UNE MASSE D'ÉTANCHÉITÉ ET BOÎTIER POUR UNE MACHINE ÉLECTRIQUE

(30) Priorität: 20.12.2018 DE 102018222494
(43) Veröffentlichungstag der Anmeldung: 27.10.2021
(73) Patentinhaber: Robert Bosch GmbH, 70442 Stuttgart (DE)
(72) Erfinder: BADER, Sascha, 73614 Schorndorf (DE); REISKE, Heinz, 72805 Lichtenstein (DE); ROHR, Philipp, 72076 Tübingen (DE); JOBST, Sebastian, 72764 Reutlingen (DE); MOELLER, Markus, 72793 Pfullingen (DE)
(86) Internationale Anmeldenummer: PCT/EP2019/084061
(87) Internationale Veröffentlichungsnummer: WO 2020/126565

(56) Entgegenhaltungen:
- EP-A1- 0 633 645
- WO-A1-2018/143324
- DE-A1- 102015 225 843
- DE-A1- 102017 209 657
- GB-A- 2 312 793
- JP-A- 2003 258 443
- JP-A- 2014 011 884
- JP-A- H07 213 030
- US-A1- 2017 005 539

## Beschreibung

### Offenbarung der Erfindung

Im Stand der Technik sind verschiedene Verfahren zur Herstellung eines Gehäuses mit einem Gehäusebecher und einer Gehäusedeckel bekannt, wie sie beispielsweise in den folgenden Dokumenten offenbart sind: DE 10 2015 225843 A1, DE 10 2017 209657 A1, EP 0 633 645 A1, GB 2 312 793 A, US 2017/005539 A1, WO 2018/143324 A1, JP 2014 011884 A und JP 2003 258443 A. Die Erfindung betrifft ein Verfahren gemäß Anspruch 1. Vorteilhaft können der Gehäusebecher und der Gehäusedeckel so in einem Verfahrensschritt, nämlich dem Ausfüllen der Rinne mit der Dichtmasse, sowohl verklebt, als auch einander abgedichtet werden.

In einer bevorzugten Ausführungsform wird zum Füllen der Rinne mit der Dichtmasse eine Dispensvorrichtung in die Rinne eingeführt, welche die Dichtmasse in die Rinne einfließen lässt. Vorteilhaft kann die Rinne so sauber aufgefüllt werden.

In einer bevorzugten Ausführungsform ist die Dispensvorrichtung ein Dispensrohr, welches in der Rinne um den Gehäusedeckel umlaufend geführt wird, und während des Geführtwerdens die Dichtmasse in die Rinne einfüllt. Die Dichtmasse kann dabei aus einer Öffnung an einem Rohrende austreten.

So kann die Dichtmasse vorteilhaft maschinell und automatisiert in die Rinne eingefüllt werden.

In einer bevorzugten Ausführungsform wird eine Rinnenbreite und eine Tiefenerstreckung der Rinne bis hin zu dem Kragen erfasst, und ein Volumen der eingegebenen Dichtmasse entlang des Rinnenumlaufsorts abhängig derart geändert, dass eine Füllhöhe der Dichtmasse bis hin zu dem Gehäusebecherrand entlang des Umlaufs konstant ist. Vorteilhaft kann so eine nicht zentrische Auflage des Gehäusedeckels auf dem Gehäusebecher, welche eine radial umlaufend zu- oder abnehmende Spaltbreite der Rinne bewirkt, so nicht zu einem Überlaufen der Dichtmasse aus der Rinne, und so einem Verschmutzen des Gehäusebechers, führen. Vorteilhaft kann die Rinne so bis zum Gehäusebecherrand bündig aufgefüllt werden.

In einer bevorzugten Ausführungsform wird die Rinnentiefe mittels elektromagnetischen Strahlen, insbesondere interferometrisch, erfasst. Vorteilhaft kann die Rinnentiefe so prozesssicher erfasst werden.

In einer bevorzugten Ausführungsform wird die Rinnenbreite mittels einer Bilderfassungsvorrichtung ermittelt, und dazu ein Bilddatensatz erzeugt, welcher die Rinne in einer Aufsicht repräsentiert. Vorteilhaft kann die Rinnenbreite so prozesssicher und automatisiert erfasst werden.

In einer bevorzugten Ausführungsform wird die Dichtmasse bis zum Rand des Gehäusebechers aufgefüllt und schließt mit dem Rand bündig ab. Vorteilhaft kann so eine Überlappungsbreite entlang der Längserstreckung des Gehäusebechers, auf der die Gehäusewand des Gehäusebechers und die Wand des Gehäusedeckels einander überlappen, vollständig zum miteinander Verkleben des Gehäusedeckels und des Gehäusebechers genutzt sein.

In einer bevorzugten Ausführungsform ist die Dichtmasse thixotrop ausgebildet, wobei die Dichtmasse nach dem Dispensen, insbesondere dem Einfüllen in die Rinne, eine größere Viskosität aufweist, als während des Einfüllens in die Rinne. Vorteilhaft kann die Dichtmasse so nicht durch einen zwischen dem Kragen und der Gehäusebecherwand gebildeten Spalt ins Gehäuseinnere fließen. Während des Einfüllvorgangs kann die Dichtmasse im Bereich des Dispensrohrs noch eine insbesondere vorbestimmte Fließstrecke verfließen und so die Rinne ausfüllen, wobei der Fließvorgang der Dichtmasse dann durch die zunehmende Viskosität des Dichtmittels gestoppt wird.

Bevorzugt ist die Dichtmasse ausgebildet, mittels Ultraviolettstrahlen aktiviert, unter Polyaddition ausgehärtet zu werden. In einem Verfahrensschritt kann die Dichtmasse dazu nach einem Eingefülltwerden in die Rinne mittels auf die Dichtmasse von einem Sender für Ultraviolettstrahlen ausgesendeter Ultraviolettstrahlen ausgehärtet werden. Bevorzugt ist die Dichtmasse ein Elastomer, insbesondere ein mittels Ultraviolettstrahlen mittels Polyaddition vernetzendes Silikonelastomer. Das Gehäuse kann so vorteilhaft mediendicht gegenüber Medien wie Wasser oder Öl, versiegelt sein.

Die Erfindung betrifft auch ein Gehäuse gemäß Anspruch 9.

Die Erfindung betrifft auch eine Vorrichtung gemäß Anspruch 10.

Die Erfindung wird nun im Folgenden anhand von Figuren und weiteren Ausführungsbeispielen beschrieben. Weitere vorteilhafte Ausführungsvarianten ergeben sich aus einer Kombination der in den abhängigen Ansprüchen und in den Figuren beschriebenen Merkmalen.
Figur 1 zeigt ein Ausführungsbeispiel für ein System zum Zusammenfügen eines Gehäusedeckels mit einem Gehäusebecher, wobei eine zwischen dem Gehäusdeckel und dem Gehäusebecher gebildete Rinne mittels einer Bilderfassung und mittels eines Interferometers ausgemessen wird und in Abhängigkeit des aus der Messung ermittelten Volumens der Rinne passend mit Dichtmasse ausgefüllt wird;
Figur 2 zeigt den in Figur 1 gezeigten Gehäusedeckel und die Rinne in einer Aufsicht.

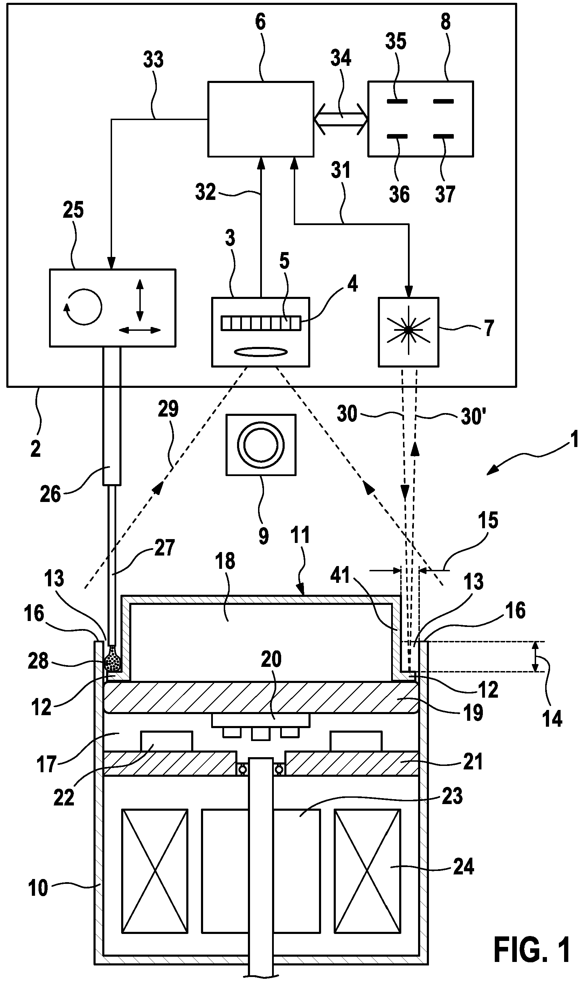

Figur 1 zeigt ein Ausführungsbeispiel für ein System 1 zum Zusammenfügen eines Gehäusedeckels 11 mit einem Gehäusebecher 10, wobei der Gehäusebecher 10 und der Gehäusedeckel 11 Bestandteil eines Gehäuses für eine elektrische Maschine sind.

Der Gehäusebecher 10 umschließt einen Hohlraum 17, in dem Komponenten der elektrischen Maschine aufgenommen sind. Der Gehäusedeckel 11 ist in diesem Ausführungsbeispiel becherförmig ausgebildet und umschließt einen Hohlraum 18. Ein an eine Gehäusedeckelwand 41 des Gehäusedeckels anschließender umlaufend ausgebildeter Kragen 12 bildet einen Gehäusedeckelrand.

Das System 1 umfasst eine Vorrichtung 2, welche ausgebildet ist, eine zwischen dem Gehäusedeckel 11 und dem Gehäusebecher 10 gebildete Rinne 13 mit einer Dichtmasse 28 auszufüllen. Der an die Wand 41 des Gehäusedeckels angeformte Kragen 12 bildet dabei bei verschlossenem Gehäusebecher 10 einen Boden der Rinne 13.

Die Vorrichtung 2 weist dazu eine Bilderfassungsvorrichtung 3 auf, wobei die Bilderfassungsvorrichtung 3 einen Detektor 4 zum Erfassen von elektromagnetischen Bildstrahlen 29 aufweist. Der Detektor 4 ist ausgebildet, in Abhängigkeit der empfangenen Bildstrahlen 29 einen Bilddatensatz zu erzeugen, welcher ein Objekt, insbesondere den Gehäusebecher 10 und den Gehäusedeckel 11, in einer Aufsicht repräsentiert. Der Detektor 4 weist dazu eine Vielzahl von Matrixelementen auf, von denen ein Matrixelement 5 beispielhaft bezeichnet ist. Die Matrixelemente sind jeweils ausgebildet, ein Matrixelementsignal zu erzeugen, welches einen Helligkeitswert und/oder einen Farbwert der empfangenen Bildstrahlen 29 repräsentiert.

Die Erfassungsvorrichtung 3 ist ausgebildet, den Bilddatensatz in Abhängigkeit der Matrixelementsignale zu erzeugen und ausgangsseitig auszugeben. Die Vorrichtung 2 weist auch eine Verarbeitungseinheit 6, insbesondere einen Mikroprozessor oder einen Mikrocontroller auf. Die Verarbeitungseinheit 6 ist ausgebildet, in Abhängigkeit des eingangsseitig empfangenen Bilddatensatzes 9 eine Breitenabmessung 15 der Rinne 3 entlang eines Rinnenumlaufs um den Gehäusedeckel 11 zu ermitteln, und einen Breitendatensatz zu erzeugen, der - insbesondere ortsabhängig - eine Rinnenbreite der Rinne entlang des Rinnenumlaufs repräsentiert.

Die Verarbeitungseinheit 6 ist über eine bidirektionale Verbindung 34 mit einem Speicher 8 verbunden und ist ausgebildet, einen Breitendatensatz 35 zu erzeugen, welcher die ermittelte Rinnenbreite entlang des Rinnenumlaufs repräsentiert und diesen über die Verbindung 34 in dem Speicher 8 abzuspeichern.

Die Vorrichtung 2 weist auch eine Positioniervorrichtung 25 und eine mit der Positioniervorrichtung 25 verbundene Füllvorrichtung 26 auf, welche ausgebildet ist, die bereits erwähnte Dichtmasse 28 in die Rinne entlang des Rinnenumlaufs einzufüllen. Die Positioniervorrichtung 25 ist dazu ausgebildet, die Füllvorrichtung in wenigstens zwei translatorischen Freiheitsgraden, insbesondere zum Anfahren einer Position in einer Ebene in Abhängigkeit eines Stellsignals zu bewegen. Die Positioniervorrichtung 25 ist dazu über eine Verbindungsleitung 33 mit der Verarbeitungseinheit 6 verbunden und kann das von der Verarbeitungseinheit 6 erzeugte Stellsignal so empfangen.

Die Positioniervorrichtung 25 ist in diesem Ausführungsbeispiel weiter ausgebildet, die Füllvorrichtung 26, insbesondere ein mit der Füllvorrichtung 26 verbundenes Dispensrohr, - insbesondere in Abhängigkeit des Stellsignals - quer zu den translatorischen Freiheitsgraden zu bewegen. So kann die Positioniervorrichtung das Dispensrohr in die Rinne 13 hineinfahren, sodass die Dichtmasse 28 dort von der Dispensvorrichtung 26 eingefüllt werden kann.

Die Vorrichtung 2 weist in diesem Ausführungsbeispiel auch eine Tiefenerfassungsvorrichtung 7 zum Erfassen einer Rinnentiefe 14 der Rinne 13 auf. Die Tiefenerfassungsvorrichtung 7 ist in diesem Ausführungsbeispiel durch ein Laser-Interferometer ausgebildet, welches ausgebildet ist, elektromagnetische Laserstrahlen 30 in Richtung der Rinne 13 zu senden, welche an dem Rinnenboden, in diesem Ausführungsbeispiel von dem umlaufend ausgebildeten Kragen 12 des Gehäusedeckels 11, reflektiert zu werden und als reflektierte Laserstrahlen 30' zu der Tiefenerfassungsvorrichtung 7 zurückreflektiert werden. Die Tiefenerfassungsvorrichtung 7 ist ausgebildet, in Abhängigkeit der empfangenen Laserstrahlen 30' einen Tiefensignal zu erzeugen, welches einen Abstand der Tiefenerfassungsvorrichtung 7 zu dem Rinnenboden, insbesondere dem Kragen 12, hin repräsentiert und dieses Tiefensignal über eine Verbindungsleitung 31 an die Verarbeitungseinheit 6 zu senden.

Die Verarbeitungseinheit 6 ist ausgebildet, in Abhängigkeit des von der Tiefenerfassungsvorrichtung 7 empfangenen Tiefensignals die Rinnentiefe 14 der Rinne 13 - beispielsweise in Abhängigkeit eines zuvor abgespeicherten Offsets - zu ermitteln und einen Tiefendatensatz 36 zu erzeugen, welcher eine Rinnentiefe 14 der Rinnen 13 entlang des Radialumlaufs repräsentiert. Die Verarbeitungseinheit 6 kann den Tiefendatensatz 36 in dem Speicher 8 abspeichern.

Die Verarbeitungseinheit 6 ist in diesem Ausführungsbeispiel ausgebildet, ein von der Dispensvorrichtung 26 in die Rinne 13 zu dispensendes Dichtmaterialvolumen entlang des Radialumlaufs in Abhängigkeit des Breitendatensatzes und des Tiefendatensatzes zu ermitteln und einen entsprechenden Dichtmassenvolumendatensatz zu erzeugen. Die Verarbeitungseinheit 6 ist weiter ausgebildet, den Dichtmassenvolumendatensatz 37 in dem Speicher 8 abzulegen.

Das Gehäuse für die elektrische Maschine, umfassend den Gehäusebecher 10 und den Gehäusedeckel 11, kann nun wie folgt zusammengefügt werden:
Der Gehäusedeckel 11 kann in einer Gehäusebecheröffnung des Gehäusebechers 10 eingefügt werden, bis der radial abweisende Kragen 12 von einem Gehäusebecherrand 16 um den Betrag der Rinnentiefe 14 beabstandet ist.

Der Gehäusebecher 10 umfasst in diesem Ausführungsbeispiel eine Kühlplatte 19, mit der wenigstens eine elektrische Komponente, insbesondere eine Steuereinheit 20, wärmeleitfähig verbunden ist. Der Gehäusedeckel 11, insbesondere der umlaufend ausgebildete Kragen 12, kommt nun nach einem Einfügen des Gehäusedeckels 11 in den Gehäusebecher 10 auf der Kühlplatte 19 zum Aufliegen. Zwischen einer Wand 41 des Gehäusedeckels 11 und einer Wand des Gehäusebechers 10 wird dann eine Rinne mit einer Rinnenbreite 15 gebildet, insoweit ein Durchmesser des Gehäusedeckels 11 kleiner ist als eine Öffnung des Gehäusebechers 10.

Die Vorrichtung 2 kann dann - wie zuvor beschrieben - den Bilddatensatz 9 erzeugen und in Abhängigkeit des Bilddatensatzes 9 und weiter in Abhängigkeit der von dem Rinnenboden, insbesondere dem Kragen 12, reflektierten Laserstrahlen 30', den Dichtmassenvolumendatensatz 37 erzeugen und in dem Speicher 8 abspeichern.

In einem weiteren Verfahrensschritt kann dann das Ausfüllen der Rinne 13 mit der Dichtmasse 28 erfolgen. Dazu kann die Verarbeitungseinheit 6 in Abhängigkeit des aus dem Speicher 8 ausgelesenen Dichtmassenvolumendatensatzes 37 die für jeden Ort der Rinne entlang des Radialumlaufs zu dispensende Menge, insbesondere Volumen und/oder Masse, an Dichtmasse ermitteln und ein Stellsignal über die Verbindungsleitung 33 an die Positioniervorrichtung 25 senden, um die Dispensvorrichtung 26 an den entsprechenden Ort der Rinne 13 zu fahren.

Die Verarbeitungseinheit 6 kann so die Positioniervorrichtung 25 derart ansteuern, dass die Dispensvorrichtung 26 das Dispensrohr 27 in der Rinne 13 entlang des Radialumlaufs in der Rinne entlang eines geschlossenen Kurvenzuges bewegt, und dabei für jeden Rinnenort in der Rinne entlang des Radialumlaufs eine - in Abhängigkeit des Dichtmassenvolumendatensatzes 37 ermittelte - Menge an Dichtmasse für jeden Ort der Rinne entlang des Materialumlaufs ermitteln. Die Dispensvorrichtung 26 kann dann entlang des Geführtwerdens in der Rinne für jeden Rinnenort entlang des Radialumlaufs die entsprechende Menge Dichtmasse - insbesondere durch Anpassen des Volumenstroms der Dichtmasse - in die Rinne einfüllen.

Die Dispensvorrichtung 26 ist dazu ausgebildet, ein Volumen der zu dispensenden Dichtmasse pro Zeitintervall zu ändern. So kann die Rinne von der Dispensvorrichtung 26 entlang des Rinnenumlaufs kontinuierlich aufgefüllt werden, wobei - abhängig von einer Rinnenbreite, welche sich entlang des Radialumlaufs ändern kann - von der Dispensvorrichtung durch eine sich entlang des Rinnenumlaufs ändernde Menge der abgegebenen Dichtmasse eine Füllhöhe der Dichtmasse in der Rinne entlang des Radialumlaufs konstant erzeugt werden kann. Die Rinne 13 kann durch einfachen, oder mehrfachen Rinnenumlauf mit Dichtmasse gefüllt werden.

In einem weiteren Schritt kann die Dichtmasse 28, insbesondere ein durch Bestrahlung mittels Ultraviolettstrahlen vernetzendes Silikonelastomer, mittels - von einem in Figur 1 nicht dargestellten Sender für Ultraviolettstrahlen - auf die Dichtmasse gesendeter Ultraviolettstrahlen ausgehärtet werden.

Der Gehäusebecher 10 und der Gehäusedeckel 11 können Bestandteil einer elektrischen Maschine sein. Figur 1 zeigt dazu elektrische Komponenten einer elektrischen Maschine, welche in dem Gehäusebecher 10 aufgenommen sind.

Die elektrische Maschine umfasst dazu die bereits erwähnte Kühlplatte 19, die Steuereinheit 20, ein Lagerschild 21, einen Rotor 23, welcher in dem Lagerschild 21 drehbar gelagert ist, und eine Leistungsendstufe 22, welche mit dem Lagerschild 21 wärmeleitfähig verbunden ist. Die Maschine umfasst auch einen Stator umfassend Statorspulen 24.

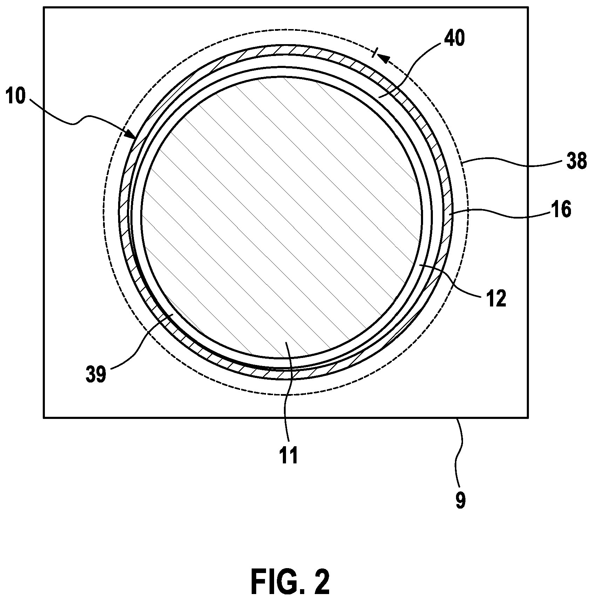

Figur 2 zeigt ein Ausführungsbeispiel für einen Bilddatensatz 9, welcher - wie in Figur 1 bereits gezeigt - von der Erfassungsvorrichtung 3 erzeugt worden sein kann.

Der Bilddatensatz 9 repräsentiert den Gehäusedeckel 11 und den Gehäusebecher 10, insbesondere den Gehäusebecherrand 16, in einer Aufsicht. Der Gehäusedeckel 11 ist in diesem Ausführungsbeispiel nicht zentrisch, und so exzentrisch, in eine Öffnung des Gehäusebechers 10 eingelegt worden, dass entlang eines radialen Rinnenumlaufs 38 eine Rinnenbreite 15 der Rinne 13 variiert. Die Rinnenbreite 15 der Rinne 13 ist so beispielsweise an einem Rinnenort 39 schmaler ausgebildet, als einem dazu gegenüberliegenden Rinnenort 40. Die in Figur 1 dargestellte Vorrichtung 2 kann die Rinne 13 nun entlang des Rinnenumlaufs 38 mit Dichtmasse 28 gleichmäßig mit einer konstanten Füllhöhe entlang des Rinnenumlaufs 38 auffüllen.

## Patentansprüche

1. Verfahren zum Verbinden eines Gehäusedeckels (11) mit einem Gehäusebecher (10) für eine elektrische Maschine,
wobei der Gehäusebecher (10) eine Gehäusebecherwand mit einer Öffnung aufweist und einen die Öffnung umschließenden ersten Öffnungsrand (16), wobei der Gehäusedeckel (11) becherförmig ausgebildet ist umfassend eine Gehäusedeckelwand (41) und einen zweiten Öffnungsrand, wobei an die Gehäusedeckelwand (41) des Gehäusedeckels (11) im Bereich des zweiten Öffnungsrandes (16) ein ununterbrochen umlaufend ausgebildeter Kragen (12) angeformt ist, welcher radial nach außen weist,
und in einem Verfahrensschritt der Gehäusedeckel (11) in die Öffnung des Gehäusebechers (10) wenigstens teilweise eingeführt wird unter Ausbildung eines verschlossenen Gehäusebechers (10), so dass durcheinander gegenüberliegende Bereiche der Gehäusedeckelwand (41) und der Gehäusebecherwand eine Rinne (13) gebildet ist, wobei dabei ein Rinnenboden der Rinne (13) durch den Kragen (12) ausgebildet wird
und die Rinne (13) wenigstens teilweise mit einer insbesondere elastisch ausgebildeten Dichtmasse (28) ausgefüllt wird.

2. Verfahren nach Anspruch 1,
**dadurch gekennzeichnet, dass**
zum Füllen der Rinne (13) mit der Dichtmasse (28) eine Dispensvorrichtung (26) in die Rinne (13) eingeführt wird, welche die Dichtmasse (28) in die Rinne (13) einfließen lässt.

3. Verfahren nach Anspruch 2,
**dadurch gekennzeichnet, dass**
die Dispensvorrichtung (26) ein Dispensrohr (27) ist, welches in der Rinne (13) um den Gehäusedeckel (11) umlaufend geführt wird und während des Geführtwerdens die Dichtmasse (28) in die Rinne (13) einfüllt.

4. Verfahren nach einem der vorhergehenden Ansprüche 1 bis 3,
**dadurch gekennzeichnet, dass**
eine Rinnenbreite (15) und eine Tiefenerstreckung (14) der Rinne (13) bis hin zu dem Kragen (12) erfasst wird und ein Volumen der eingegebenen Dichtmasse (28) entlang des Rinnenumlaufs (38) ortsabhängig derart geändert wird, dass eine Füllhöhe der Dichtmasse (28) bis hin zu dem ersten Öffnungsrand (16) des Gehäusebechers (10) entlang des Rinnenumlaufs (38) konstant ist.

5. Verfahren nach Anspruch 4,
**dadurch gekennzeichnet, dass**
die Rinnentiefe (14) mittels elektromagnetischen Strahlen (30, 30') interferometrisch erfasst wird.

6. Verfahren nach Anspruch 4 oder 5,
**dadurch gekennzeichnet, dass**
die Rinnenbreite (15) mittels einer Bilderfassungsvorrichtung (3, 4) ermittelt wird, und dazu ein Bilddatensatz (9) erzeugt wird, welcher die Rinne (13) in einer Aufsicht repräsentiert.

7. Verfahren nach einem der vorhergehenden Ansprüche,
**dadurch gekennzeichnet, dass**
die Dichtmasse (28) bis zum ersten Öffnungsrand (16) des Gehäusebechers (10) aufgefüllt wird und mit dem ersten Öffnungsrand (16) bündig abschließt.

8. Verfahren nach einem der Ansprüche 2 bis 7,
**dadurch gekennzeichnet, dass**
Dichtmasse (28) thixotrop ausgebildet ist, und nach dem Dispensen eine größere Viskosität aufweist als während des Einfüllens in die Rinne (13).

9. Gehäuse (2) für eine elektrische Maschine, insbesondere erzeugt durch ein Verfahren nach einem der vorhergehenden Ansprüche,
wobei das Gehäuse (2) einen Gehäusebecher (10) mit einer Gehäusebecherwand und mit einer Öffnung und einen die Öffnung umschließenden ersten Öffnungsrand (16) aufweist und einen Gehäusedeckel (11) aufweist, welcher ausgebildet ist, die Öffnung des Gehäusebechers (10) zu verschließen, und der Gehäusedeckel (11) becherförmig ausgebildet ist umfassend eine Gehäusedeckelwand (41) und einen zweiten Öffnungsrand, wobei an die Gehäusedeckelwand (41) des Gehäusedeckels (11) im Bereich des zweiten Öffnungsrandes ein ununterbrochen umlaufend ausgebildeter Kragen (12) angeformt ist, welcher radial nach außen weist, so dass bei einem durch den Gehäusedeckel (11) verschlossenen Gehäusebecher (10) der Kragen (12) einen Rinnenboden einer Rinne (13) bildet, welche durch zueinander gegenüberliegende Bereiche der Gehäusedeckelwand (41)des Gehäusedeckels (11) und der Gehäusebecherwand (16) des Gehäusebechers (10) gebildet ist, wobei die Rinne (13) mittels einer insbesondere elastisch ausgebildeten Dichtmasse (28) gefüllt ist.

10. Vorrichtung (2) zum Dispensen von Dichtmasse (28) in eine um einen mit einem Gehäusebecher (10) verbundenen Gehäusedeckel (11) umlaufende Rinne (13), wobei der Gehäusebecher (10) eine Öffnung aufweist und einen die Öffnung umschließenden ersten Öffnungsrand (16), wobei der Gehäusedeckel (11) becherförmig ausgebildet ist umfassend eine Gehäusedeckelwand (41) und einen zweiten Öffnungsrand, wobei an der Gehäusedeckelwand (41) des Gehäusedeckels (11) im Bereich des zweiten Öffnungsrandes ein ununterbrochen umlaufend ausgebildeter Kragen (12) angeformt ist, welcher radial nach außen weist, und wobei der Gehäusedeckel (11) unter Ausbildung eines verschlossenen Gehäusebechers (10) in die Öffnung des Gehäusebechers (10) wenigstens derartig teilweise eingeführt ist, dass durch einander gegenüberliegende Bereiche der Gehäusedeckelwand (41) und der Gehäusebecherwand eine Rinne (13) mit einem radialen Rinnenumlauf (38) gebildet ist, wobei die Vorrichtung (2) wenigstens eine Erfassungsvorrichtung (3, 7) aufweist, welche ausgebildet ist, eine Rinnentiefe (14) und eine Rinnenbreite (15) entlang des radialen Rinnenumlaufs (38) zu erfassen, und wobei die Vorrichtung (2) ausgebildet ist, einen die Rinnentiefe (14) repräsentierenden Tiefendatensatz und einen die Rinnenbreite (14) repräsentierendes Breitendatensatz zu erzeugen, und die Vorrichtung eine Dispensvorrichtung (26) zum Einfüllen von Dichtmasse (28) in die Rinne (13) aufweist und ausgebildet ist, in Abhängigkeit des Tiefendatensatzes und in Abhängigkeit des Breitendatensatzes die einen Dichtmassenvolumendatensatz (37) zu erzeugen, welcher ein von der Dispensvorrichtung (26) in die Rinne (13) zu dispensendes Dichtmaterialvolumen entlang des Rinnenumlaufs (38) repräsentiert und die Rinne (13) in Abhängigkeit des Dichtmassenvolumendatensatzes (37) derart mit Dichtmasse (28) aufzufüllen, dass die Dichtmasse (28) den ersten Öffnungsrand (16) des Gehäusebechers (10) nicht überschreitet.

## Claims

1. Method for connecting a housing cover (11) to a housing cup (10) for an electric machine,
wherein the housing cup (10) has a housing cup wall with an opening, and a first opening edge (16) surrounding the opening, wherein the housing cover (11) is of cup-shaped form and comprises a housing cover wall (41) and a second opening edge, wherein a collar (12) of uninterrupted encircling form is integrally formed on the housing cover wall (41) of the housing cover (11) in the region of the second opening edge (16), which collar points radially outwards,
and in a method step, the housing cover (11) is at least partly inserted into the opening of the housing cup (10) so as to form a closed housing cup (10), so that a channel (13) is formed by mutually opposite regions of the housing cover wall (41) and the housing cup wall, wherein a channel bottom of the channel (13) is formed by the collar (12) here
and the channel (13) is at least partially filled with a sealing compound (28) which is in particular of elastic form.

2. Method according to Claim 1,
**characterized in that**
to fill the channel (13) with the sealing compound (28), a dispensing device (26) is inserted into the channel (13), which causes the sealing compound (28) to flow into the channel (13).

3. Method according to Claim 2,
**characterized in that**
the dispensing device (26) is a dispensing pipe (27), which is guided circumferentially around the housing cover (11) in the channel (13) and puts the sealing compound (28) into the channel (13) as it is guided.

4. Method according to one of the preceding Claims 1 to 3,
**characterized in that**
a channel width (15) and a depth extent (14) of the channel (13) as far as the collar (12) is detected, and a volume of the sealing compound (28) put in is changed along the channel circumference (38) as a function of location in such a way that a filling level of the sealing compound (28) as far as the first opening edge (16) of the housing cup (10) is constant along the channel circumference (38).

5. Method according to Claim 4,
**characterized in that**
the channel depth (14) is detected interferometrically by means of electromagnetic radiation (30, 30').

6. Method according to Claim 4 or 5,
**characterized in that**
the channel width (15) is determined by means of an image capture device (3, 4), and for this purpose an image dataset (9) is produced, which represents the channel (13) in a top view.

7. Method according to one of the preceding claims,
**characterized in that**
the sealing compound (28) is put in as far as the first opening edge (16) of the housing cup (10) and ends flush with the first opening edge (16).

8. Method according to one of Claims 2 to 7,
**characterized in that**
the sealing compound (28) is thixotropic and has a greater viscosity following the dispensing than as it is put into the channel (13).

9. Housing (2) for an electric machine, in particular produced by a method according to one of the preceding claims,
wherein the housing (2) has a housing cup (10) with a housing cup wall and with an opening, and a first opening edge (16) surrounding the opening, and a housing cover (11), which is designed to close the opening of the housing cup (10), and the housing cover (11) is of cup-shaped form and comprises a housing cover wall (41) and a second opening edge, wherein a collar (12) of uninterrupted encircling form is integrally formed on the housing cover wall (41) of the housing cover (11) in the region of the second opening edge, which collar points radially outwards, so that, when the housing cup (10) is closed by the housing cover (11), the collar (12) forms a channel bottom of a channel (13), which is formed by mutually opposite regions of the housing cover wall (41) of the housing cover (11) and the housing cup wall (16) of the housing cup (10), wherein the channel (13) is filled by means of a sealing compound (28) which is in particular of elastic form.

10. Device (2) for dispensing sealing compound (28) into a channel (13) running around a housing cover (11) connected to a housing cup (10), wherein the housing cup (10) has an opening and a first opening edge (16) surrounding the opening, wherein the housing cover (11) is of cup-shaped form and comprises a housing cover wall (41) and a second opening edge, wherein a collar (12) of uninterrupted encircling form is integrally formed on the housing cover wall (41) of the housing cover (11) in the region of the second opening edge, which collar
points radially outwards, and wherein the housing cover (11) is at least partly inserted into the opening of the housing cup (10) so as to form a closed housing cup (10) in such a way that a channel (13) with a radial channel circumference (38) is formed by mutually opposite regions of the housing cover wall (41) and the housing cup wall, wherein the device (2) has at least one detection device (3, 7), which is designed to detect a channel depth (14) and a channel width (15) along the radial channel circumference (38), and wherein the device (2) is designed to produce a depth dataset representing the channel depth (14) and a width dataset representing the channel width (14), and the device has a dispensing device (26) for putting sealing compound (28) into the channel (13) and is designed to produce the a sealing compound volume dataset (37), depending on the depth dataset and depending on the width dataset, which sealing compound volume dataset represents a sealing material volume to be dispensed by the dispensing device (26) into the channel (13) along the channel circumference (38) and to fill the channel (13) with sealing compound (28) depending on the sealing compound volume dataset (37) in such a way that the sealing compound (28) does not overrun the first opening edge (16) of the housing cup (10).

## Revendications

1. Procédé de raccordement d'un couvercle de boîtier (11) à un godet de boîtier (10) pour une machine électrique,
dans lequel le godet de boîtier (10) présente une paroi de godet de boîtier comportant une ouverture et un premier bord d'ouverture (16) entourant l'ouverture, dans lequel le couvercle de boîtier (11) est réalisé en forme de godet comprenant une paroi de couvercle de boîtier (41) et un deuxième bord d'ouverture, dans lequel un collet (12) réalisé de manière ininterrompue sur tout le pourtour est formé sur la paroi de couvercle de boîtier (41) du couvercle de boîtier (11) dans la zone du deuxième bord d'ouverture (16), ledit collet étant dirigé radialement vers l'extérieur,
et dans une étape du procédé, le couvercle de boîtier (11) est introduit au moins partiellement dans l'ouverture du godet de boîtier (10) en formant un godet de boîtier (10) fermé, de sorte qu'une rainure (13) est formée par des zones opposées l'une à l'autre de la paroi de couvercle de boîtier (41) et de la paroi de godet de boîtier, un fond de rainure de la rainure (13) étant alors formé par le collet (12),
et la rainure (13) est remplie au moins partiellement d'une masse d'étanchéité (28), réalisée notamment sous forme élastique.

2. Procédé selon la revendication 1,
**caractérisé en ce que**
un dispositif de distribution (26) est introduit dans la rainure (13) pour remplir la rainure (13) avec la masse d'étanchéité (28), lequel permet à la masse d'étanchéité (28) de s'écouler dans la rainure (13).

3. Procédé selon la revendication 2,
**caractérisé en ce que**
le dispositif de distribution (26) est un tube de distribution (27), lequel est guidé dans la rainure (13) sur tout le pourtour du couvercle de boîtier (11) et, pendant son guidage, introduit la masse d'étanchéité (28) dans la rainure (13).

4. Procédé selon l'une des revendications 1 à 3,
**caractérisé en ce que**
une largeur de rainure (15) et une extension en profondeur (14) de la rainure (13) jusqu'au collet (12) étant détectées, et un volume de la masse d'étanchéité (28) introduite étant modifié en fonction de la position le long du pourtour de la rainure (38), de telle sorte qu'une hauteur de remplissage de la masse d'étanchéité (28) jusqu'au premier bord d'ouverture (16) du godet de boîtier (10) soit constante le long du pourtour de la rainure (38).

5. Procédé selon la revendication 4,
**caractérisé en ce que**
la profondeur de la rainure (14) étant détectée par interférométrie au moyen de rayonnements électromagnétiques (30, 30').

6. Procédé selon la revendication 4 ou 5,
**caractérisé en ce que**
la largeur de la rainure (15) étant déterminée au moyen d'un dispositif de capture d'images (3, 4), et à cet effet un jeu de données d'image (9) étant généré, lequel représente la rainure (13) en vue de dessus.

7. Procédé selon l'une des revendications précédentes,
**caractérisé en ce que**
la masse d'étanchéité (28) étant remplie jusqu'au premier bord d'ouverture (16) du godet de boîtier (10) et affleurant avec le premier bord d'ouverture (16).

8. Procédé selon l'une des revendications 2 à 7,
**caractérisé en ce que**
la masse d'étanchéité (28) étant réalisée sous forme thixotrope et présentant, après la distribution, une viscosité plus élevée que pendant l'introduction dans la rainure (13).

9. Boîtier (2) pour une machine électrique, notamment obtenu par un procédé selon l'une des revendications précédentes,
dans lequel le boîtier (2) présente un godet de boîtier (10) comportant une paroi de godet de boîtier, une ouverture et un premier bord d'ouverture (16) entourant l'ouverture, et présente un couvercle de boîtier (11) conçu pour fermer l'ouverture du godet de boîtier (10), le couvercle de boîtier (11) étant réalisé en forme de godet comprenant une paroi de couvercle de boîtier (41) ainsi qu'un deuxième bord d'ouverture, un collet (12) réalisé de manière ininterrompue sur tout le pourtour étant formé sur la paroi de couvercle de boîtier (41) du couvercle de boîtier (11) dans la zone du deuxième bord d'ouverture, ledit collet étant dirigé radialement vers l'extérieur, de sorte que, lorsque le godet de boîtier (10) est fermé par le couvercle de boîtier (11), le collet (12) forme un fond de rainure d'une rainure (13), laquelle est formée par des zones opposées l'une à l'autre de la paroi de couvercle de boîtier (41) du couvercle de boîtier (11) et de la paroi de godet de boîtier (16) du godet de boîtier (10), la rainure (13) étant remplie au moyen d'une masse d'étanchéité (28), réalisée notamment sous forme élastique.

10. Dispositif (2) destiné à distribuer une masse d'étanchéité (28) dans une rainure (13) s'étendant autour d'un couvercle de boîtier (11) raccordé à un godet de boîtier (10), le godet de boîtier (10) comportant une ouverture ainsi qu'un premier bord d'ouverture (16) entourant l'ouverture, le couvercle de boîtier (11) étant réalisé en forme de godet comprenant une paroi de couvercle de boîtier (41) et un deuxième bord d'ouverture, un collet (12) réalisé de manière ininterrompue sur tout le pourtour étant formé sur la paroi de couvercle de boîtier (41) du couvercle de boîtier (11) dans la zone du deuxième bord d'ouverture, ledit collet
étant dirigé radialement vers l'extérieur, et le couvercle de boîtier (11) étant introduit au moins partiellement dans l'ouverture du godet de boîtier (10) de telle sorte qu'un godet de boîtier (10) fermé soit formé et qu'une rainure (13) présentant un pourtour radial de rainure (38) soit formée par des zones opposées l'une à l'autre de la paroi de couvercle de boîtier (41) et de la paroi de godet de boîtier, le dispositif (2) comprenant au moins un dispositif de détection (3, 7) conçu pour détecter une profondeur de rainure (14) et une largeur de rainure (15) le long du pourtour radial de la rainure (38), et le dispositif (2) étant conçu pour générer un jeu de données de profondeur représentant la profondeur de rainure (14) ainsi qu'un jeu de données de largeur représentant la largeur de rainure (14), le dispositif comprenant un dispositif de distribution (26) destiné à introduire la masse d'étanchéité (28) dans la rainure (13) et étant conçu pour générer, en fonction du jeu de données de profondeur et du jeu de données de largeur, l'un jeu de données de volume de masse d'étanchéité (37) représentant un volume de matériau d'étanchéité à distribuer par le dispositif de distribution (26) dans la rainure (13) le long du pourtour de la rainure (38), et pour remplir la rainure (13) avec la masse d'étanchéité (28) en fonction du jeu de données de volume de masse d'étanchéité (37), de telle sorte que la masse d'étanchéité (28) ne dépasse pas le premier bord d'ouverture (16) du godet de boîtier (10).
